Europäisches Patentamt

European Patent Office

Office européen des brevets

(11) Veröffentlichungsnummer: **0 043 590**
**B1**

(12) **EUROPÄISCHE PATENTSCHRIFT**

(45) Veröffentlichungstag der Patentschrift: **03.04.85**

(51) Int. Cl.⁴: **F 16 L 23/00, F 16 L 23/04**

(21) Anmeldenummer: **81105304.0**

(22) Anmeldetag: **08.07.81**

(54) Flanschverbindung.

(30) Priorität: **08.07.80 DE 3025868**

(43) Veröffentlichungstag der Anmeldung:
**13.01.82 Patentblatt 82/02**

(45) Bekanntmachung des Hinweises auf die
Patenterteilung:
**03.04.85 Patentblatt 85/14**

(84) Benannte Vertragsstaaten:
**CH DE FR GB IT LI**

(56) Entgegenhaltungen:
**DE-A-1 650 127**
**DE-A-2 825 492**
**DE-B-2 530 362**
**DE-C- 61 607**
**DE-C- 276 373**
**GB-A- 273 344**
**US-A-3 836 159**

(73) Patentinhaber: **Max-Planck-Gesellschaft zur
Förderung der Wissenschaften e.V.
Bunsenstrasse 10
D-3400 Göttingen (DE)**

(72) Erfinder: **Weber, German
Torquato-Tasso-Strasse 49
D-8000 München 40 (DE)**

(74) Vertreter: **Von Bezold, Dieter, Dr. Patentanwälte
Dr.Dieter v. Bezold et al
Dipl.-Ing. Peter Schütz Dipl.-Ing. Wolfgang
Heusler Postfach 860260 Maria-Theresia-Strasse
22
D-8000 München (DE)**

Courier Press, Leamington Spa, England.

## Beschreibung

Die vorliegende Erfindung betrifft eine Flanschverbindung mit zwei Flanschen, die in einander gegenüberliegenden Stirnseiten jeweils eine ringförmige Vertiefung mit zylindrischen Seitenwänden aufweisen, und mit einem hohlzylinderförmigen Dichtring, dessen axiale Enden sich keilförmig verjüngen, bei montierter Flanschverbindung abdichtend in die ringförmigen Vertiefungen eingreifen und aus einem Werkstoff bestehen, der sich leichter plastisch verformt als der die Vertiefung bildende Werkstoff.

Eine solche Flanschverbindung ist aus DE—A—2.825.492 bekannt. Bei dieser bekannten Flanschverbindung ist der Dichtring durch zwei kegelstumpfförmige Hauptflächen und zwei diese verbindende, kleine kreiszylindermantelförmige Flächen begrenzt. Die Zylinderflächen sind mit einem relativ leicht plastisch verformbaren Material beschichtet. Die radialen Abmessungen des als abgestumpfter konischer Zylinder bezeichneten bekannten Dichtringes sind etwas kleiner als die der ringnutförmigen Vertiefungen. Bei Ausübung einer axialen Kraft wird der konische Dichtring so verformt, daß sich die beiden kleinen beschichteten zylindrischen Flächen jeweils an eine Seitenwand einer Vertiefung abdichtend anlegen. Bei Anwendungen, z.B. Ventilen, wo der Dichtring in der einen Vertiefung verbleiben muß, wird dies durch ein am betreffenden Flansch angebrachtes Klemmelement erreicht.

Aus Fig. 7 der GB—A—273,344, ist eine Flanschverbindung mit zwei Flanschen bekannt, deren einander gegenüberliegende Stirnseiten ringförmige Vertiefungen mit zylindrischen Seitenwänden und ebenem Boden aufweisen, in die ein hohlzylinderförmiger Dichtring mit zylindrischen Seitenwänden eingreift. Die axialen Enden des Dichtringes sind bis auf eine mittige ringförmige Rippe eben und werden durch ein Packungsmaterial gegen den Boden der Vertiefungen abgedichtet. Die ringförmige Rippe hat eine ebene Stirnfläche und dient dazu, ein übermäßiges Zusammenpressen des Packungsmaterials zu verhindern.

Die bekannten Flanschverbindungen lassen alle in der einen oder anderen Hinsicht zu wünschen übrig, wenn die Flanschverbindung durch Fernbedienung zusammengefügt und wieder gelöst werden soll. Bei den bekannten Flanschverbindungen müssen nämlich die Flansche beim Zusammenfügen axial genau fluchten und/oder es besteht die Gefahr, daß beim Lösen der Flanschverbindungen der Dichtring herausfällt oder zumindest nicht reproduzierbar an einem bestimmten Flansch verbleibt. Wenn andererseits der Dichtring durch ein Klemmelement am einen Flansch befestigt ist, läßt er sich nicht ohne weiteres durch einen Manipulator oder dergl. auswechseln, wenn dies nötig wird.

Dadurch, daß die axialen Enden des hohlzylinderischen Dichtringes von seinen beiden Zylinderflächen aus symmetrisch abgeschrägt sind, daß die ringförmige Vertiefung mindestens eines der Flansche tiefer ist als die axiale Länge des in diese Vertiefung hineinreichenden keilförmigen Endes des Dichtringes und daß entweder der Dichtring mit relativ enger Passung zwischen benachbarten Zylinderwänden von Dichtring und Vertiefung in diese ringförmige Vertiefung eingesetzt ist oder die Form des Dichtringes etwas von der Form dieser Vertiefung abweicht, so daß der Dichtring klemmend in dieser Vertiefung gehalten ist, wird erreicht, daß die vorliegende Flanschverbindung weitestgehend selbstzentrierend ist, sich also auch dann einwandfrei zusammenfügen läßt, wenn die beiden Flansche axial nicht genau fluchten, und daß der Dichtring beim Lösen der Flanschverbindung immer in der Vertiefung eines bestimmten Flansches bleibt, trotzdem jedoch bei Bedarf leicht ausgewechselt werden kann.

Gemäß einer Weiterbildung der Erfindung besteht der Dichtring aus einem ringförmig gebogenen und an den Enden stumpf verschweißten Stück Bandmaterial, so daß er auch für große Nenndurchmesser preiswert hergestellt werden kann.

Der Dichtring enthält gemäß einer anderen Weiterbildung der Erfindung einen Kern aus einem relativ leicht deformierbaren Werkstoff, der zwischen zwei zylindrischen Ringen aus einem harten Werkstoff angeordnet ist. Hierdurch wird eine übermäßige Verformung und eine Verklemmung des Dichtrings in den Nuten verhindert.

Bei Verwendung der Flanschverbindung für Vakuumanlagen ist gemäß einer anderen Weiterbildung der Erfindung in den Stirnseiten der Flansche innerhalb der ringförmigen Vertiefungen, also auf der Vakuumseite, eine Reihe radialer Schlitze vorgesehen, um die Evakuierung der Vertiefungen zu erleichtern.

Im folgenden werden Ausführungsbeispiele der Flanschverbindung gemäß der Erfindung unter Bezugnahme auf die Zeichnung näher erläutert.

Es zeigen:

Fig. 1 eine Axialschnittansicht eines Teiles einer Flanschverbindung gemäß einer Ausführungsform der Erfindung und

Fig. 2 einen abgewandelten Dichtring für die Flanschverbindung gemäß Fig. 1.

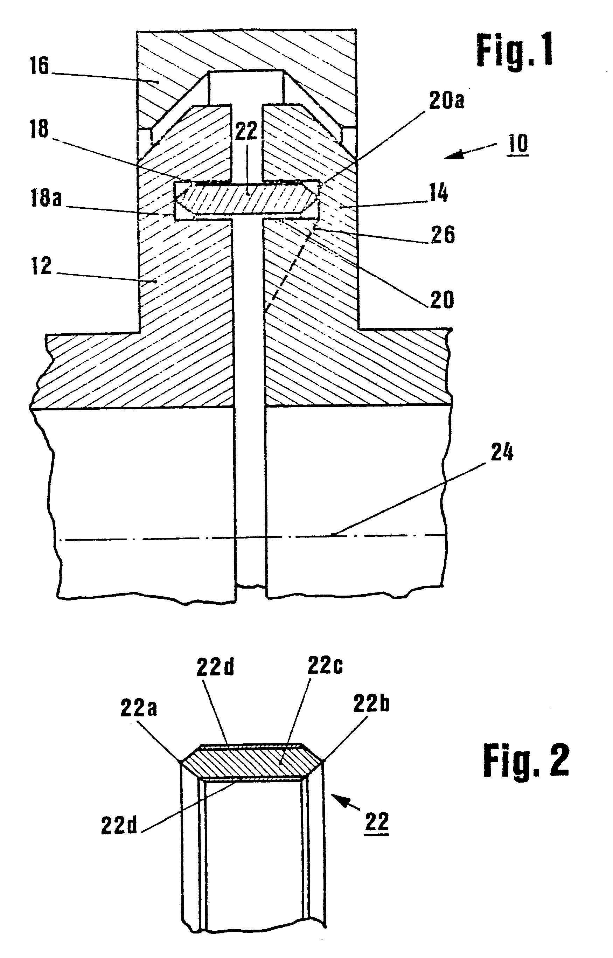

Die in Fig. 1 dargestellte Flanschverbindung 10 weist zwei kreisringförmige Flansche 12 und 14, die durch irgendeine geeignete Vorrichtung axial zusammendrückbar sind, auf, z.B. durch Schraubenbolzen (nicht dargestellt) oder durch eine Art von Klemmbridenring 16, der in bekannter Weise keilförmig zulaufende Innenflächen aufweist und mit entsprechend abgeschrägten Endflächen der Flansche zusammenwirkt, so daß die Flansche beim Verringern des Umfanges des Ringes 16 (z.B. mittels eines Kniehebelverschlusses oder einer ferngesteuerten Schraubenspindel) axial zusammengedrückt werden.

Die Flansche 12 und 14 haben einander zugewandte Stirnflächen, in denen sich Vertiefungen in Form von Ringnuten 18 bzw. 20 befinden, die zylindermantelförmige Seitenwände und eine Nutengrundfläche 18a bzw. 20a aufweisen, welche jeweils eine ringförmige Dichtzone bilden. Da diese Dichtzone sich am Boden der jeweiligen Ringnut befindet, ist die Gefahr von Beschädigungen durch Verkratzen oder dgl. sehr gering.

Die Flanschverbindung gemäß Fig. 1 enthält ferner einen Dichtring 22, der im wesentlichen die Form eines geraden Hohlzylinders hat und so bemessen ist, daß er in die im montierten Zustand der Flanschverbindung miteinander fluchtenden Ringnuten 18 und 20 paßt. Die axialen Enden des Dichtringes verjüngen sich keilförmig (von beiden Zylinderflächenseiten aus symmetrisch) und bilden jeweils eine scharfe stirnseitige Kante 22a bzw. 22b (Fig. 2). Die ganze Flanschverbindung ist vorteilhafterweise bezüglich einer Achse 24 rotationssymmetrisch.

Die Flansche 12 und 14 bestehen zweckmäßigerweise aus einem verhältnismäßig harten Werkstoff, wie Stahl, während der Dichtring 22 aus einem Werkstoff, wie Aluminium, einer Aluminiumlegierung, Kupfer oder dgl. gefertigt wird, die im Vergleich zum Flanschwerkstoff verhältnismäßig leicht deformierbar ist, so daß sich die spitz zulaufenden axialen Enden des Dichtringes beim Zusammenpressen der Flansche verformen und eine einwandfreie Dichtung zwischen dem Dichtring und der Nutengrundfläche ergibt.

Die Nut in mindestens einem der Flansche ist mindestens so tief, daß ein genügend sicherer Sitz des Dichtringes in der betreffenden Nut gewährleistet ist, wenn der Dichtring in die Nut eingesetzt ist, insbesondere soll die Nut wesentlich tiefer sein als das sich verjüngende Ende des Dichtringes. Dies hat den Vorteil, daß die Flanschverbindung leicht manipuliert werden kann, ohne daß der Dichtring herausfällt. Man kann ferner den Dichtring in die Nut des einen Flansches einsetzen und später die Flanschverbindung z.B. durch eine automatische Vorrichtung oder ein fernbedientes Gerät montieren, wobei dann die keilförmig zulaufenden Enden des Dichtringes und dessen hohlzylinderförmiger mittlerer Teil eine automatische Zentrierung der beiden Flansche bewirken.

Bei Vakuumanwendungen können die Ringnuten 18 und 20 in Radialrichtung wesentlich breiter bemessen werden als die radiale Dicke des Dichtringes 22, damit eine schnelle Evakuierung der sich auf der Vakuumseite befindlichen Nutenteile gewährleistet ist. Man kann jedoch auch eine Reihe radialer Schlitze vorsehen, wie es z.B. bei 26 in Fig. 1 angedeutet ist, Wenn die Nuten wesentlich breiter sind als der Dichtring, kann die gewünschte Halterung des Dichtrings in der Nut durch eine relativ enge Passung zwischen der radial äußeren Seite des Dichtringes und der radial äußeren Nutenwand und/oder dadurch erreicht werden, daß die Form des Dichtringes etwas von der der Nut abweicht, so daß sich eine kraftschlüssige, klemmende Verbindung ergibt. Die beschriebenen Maßnahmen, die eine Halterung des Dichtringes in der Nut eines Flansches bewirken, können bei nur einem der beiden Flansche verwirklicht sein, dann ist gewährleistet, daß der Dichtring beim Lösen der Verbindung immer in dem betreffenden einen Flansch verbleibt.

Der in Fig. 2 dargestellt abgewandelte Dichtring enthält einen Kern 22c aus einem relativ leicht deformierbaren Werkstoff, der zwischen zwei zylindrischen Ringen 22d aus einem harten Werkstoff angeordnet ist, Hierdurch wird auch bei verhältnismäßig starken und evtl. nicht genau axial gerichteten Zusammenpreßdrücken vermieden, daß der mittlere Bereich des Dichtringes sich übermäßig verformt und der Dichtring dann in den Nuten klemmt.

Der Dichtring 22 wird vorteilhafterweise aus einem Stück Profilband hergestellt, das zu einem Ring gebogen und mit seinen Enden stumpf verschweißt wird. Die Schweißstelle wird bearbeitet und geglättet, so daß ein Ring mit gleichförmigem Querschnitt und glatter Oberfläche entsteht. Dieses Verfahren zur Herstellung des Dichtringes ist besonders für Dichtungen großen Durchmessers sehr vorteilhaft und kostensparend. Während eine normale Metalldichtung für eine Flanschverbindung mit einem Nenndurchmesser von 400 mm derzeit etwa 280 DM kostet, läßt sich ein Dichtring 22 für eine Flanschdichtung gemäß der Erfindung mit dem gleichen Nenndurchmesser für etwa 1/10 dieses Preises herstellen.

Ein bevorzugtes Material für den Dichtring 22 ist Reinaluminium (99,9% Al).

## Patentansprüche

1. Flanschverbindung mit zwei Flanschen (12, 14), die in einander gegenüberliegenden Stirnseiten jeweils eine ringförmige Vertiefung (18, 20) mit zylindrischen Seitenwänden aufweisen, und mit einem hohlzylinderförmigen Dichtring (22), dessen axiale Enden sich keilförmig verjüngen, bei montierter Flanschverbindung abdichtend in die ringförmigen Vertiefungen (18, 20) eingreifen und aus einem Werkstoff bestehen, der sich leichter plastisch verformt als der die Vertiefungen bildende Werkstoff, dadurch gekennzeichnet, daß

die axialen Enden des hohlzylindrischen Dichtringes (22) von seinen beiden Zylinderflächen aus symmetrisch abgeschägt sind, daß

die ringförmige Vertiefung (18, 20) mindestens eines der Flansche (12, 14) tiefer ist als die axiale Länge des in diese Vertiefung hineinreichenden keilförmigen Endes des Dichtringes (22), und daß

entweder der Dichtring (22) mit relativ enger Passung zwischen benachbarten Zylinderwänden von Dichtring und Vertiefung in diese ringförmige Vertiefung eingesetzt ist oder die Form des Dichtringes (22) etwas von der Form dieser Vertiefung (18, 20) abweicht, so daß der Dichtring klemmend in dieser Vertiefung gehalten ist.

2. Flanschverbindung nach Anspruch 1, dadurch gekennzeichnet, daß der Dichtring (22) aus einem ringförmig gebogenen und an den Enden stumpf verschweißten Stück Bandmaterial besteht.

3. Flanschverbindung nach Anspruch 1, dadurch gekennzeichnet, daß der Dichtring (22) einen Kern (22c) aus einem relativ leicht deformierbaren Werkstoff enthält, der zwischen zwei zylindrischen Ringen (22d) aus einem harten Werkstoff angeordnet ist.

4. Flanschverbindung nach einem der Ansprüche 1 bis 3, dadurch gekennzeichnet, daß die Breite der ringförmigen Vertiefung (18, 20) um höchstens 10% größer ist als die Dicke des in diese Vertiefung hineinreichenden hohlzylindrischen Teils des Dichtringes (22).

5. Flanschverbindung nach einem der Ansprüche 1 bis 4 zur Vakuumanwendung, dadurch gekennzeichnet, daß zur schnellen Evakuierung der sich auf der Vakuumseite befindlichen Hohlräume zwischen keilförmigem Ende des Dichtringes (22) und ringförmiger Vertiefung (18, 20) auf der Vakuumseite entweder ein ausrechend breiter Spalt zwischen den benachbarten Zylinderwänden von Dichtring und Vertiefung vorgesehen ist oder die benachbarten Stirnseiten der Flansche (12, 14) mit radialen Schlitzen (26) versehen sind, die in die ringförmigen Vertiefungen (18, 20) münden und sich dort bis zum Grund (18a, 20b) der Vertiefung erstrecken.

**Claims**

1. Flange joint having two flanges (12, 14) which in mutually opposing end surfaces each have an annular recess (18, 20) with cylindrical side walls, and having a hollow cylindrical sealing ring (22) whose axial ends taper in the manner of a wedge, which engages in a sealing manner in the annular recesses when the flanged joint is assembled, and comprises a material which more readily plastically deforms than the material defining the recesses, characterised in that

the axial ends of the hollow cylindrical sealing ring (22) are symmetrically bevelled from its two cylindrical surfaces, that

the annular recess (18, 20) of at least one of the flanges (12, 14) is deeper than the axial length of the wedge-shaped end of the sealing ring (22) extending into this recess, and that

either the sealing ring (22) is inserted as a relatively tight fit between adjacent cylindrical walls of sealing ring and recess into this annular recess or the shape of the sealing ring (22) differs somewhat from the shape of this recess (18, 20) so that the sealing ring is held jammed in this recess.

2. Flanged joint as claimed in Claim 1 characterised in that the sealing ring (22) comprise an annularly bent piece of strip material butt welded at the ends.

3. Flanged joint as claimed in Claim 1 characterised in that the sealing ring (22) includes a core (22c) of a relatively readily deformable material which is disposed between two cylindrical rings (22d) of a hard material.

4. Flanged joint as claimed in one of Claims 1—3, characterised in that the breadth of the annular recess (18, 20) is at most 10% larger than the thickness of the hollow cylindrical portion of the sealing ring (22) extending into this recess.

5. Flanged joint as claimed in one of Claims 1—4 for vacuum use, characterised in that for the purpose of the rapid evacuation of the hollow space situated on the vacuum side between wedgeshaped end of the sealing ring (22) and annular recess (18, 20) on the vacuum side, either a sufficiently broad gap is provided between the adjacent cylindrical walls of sealing ring and recess, or the adjacent end surfaces of the flanges (12, 14) are provided with radial slots (26) which communicate with the annular recesses (18, 20) and extend there to the base (18a, 20b) of the recess.

**Revendications**

1. Raccord à brides comportant deux brides (12, 14) qui comportent dans chacune de deux faces frontales mutuellement en regard un creux annulaire (18, 20) comportant des parois latérales cylindriques, ainsi qu'un joint annulaire (22) en forme de cylindre creux dont les extrémités axiales s'amincissent en coin, pénètrent, lorsque le raccord à brides est monté, de faç étanche dans les creux annulaires (18, 20) et sont en une matière qui se déforme plastiquement plus facilement que la matière constituant les creux, caractérisé en ce que les extrémités axiales du joint annulaire en forme de cylindre creux (22) sont biseautées symétriquement à partir de ses deux surfaces cylindriques, en ce que le creux annulaire (18, 20) de l'une au moins des brides (12, 14) est plus profond que la longueur axiale de l'extrémité cunéiforme du joint annulaire (22) pénétrant dans ce creux, et en ce que le joint annulaire (22) est introduit avec un ajustement relativement serré entre des parois cylindriques voisines du joint annulaire et du creux dans ce creux annulaire, ou bien la forme du joint annulaire (22) diffère légèrement de la forme de ce creux (18, 20), de sorte que le joint annulaire est retenu en étant coïncé dans ce creux.

2. Raccord à brides selon la revendication 1, caractérisé en ce que le joint annulaire (22) est constitué par une piéce de matériau en bande, arquée annulairement et soudée en bout aux extrémités.

3. Raccord à brides selon la revendication 1, caractérisé en ce que le joint annulaire (22) contient une partie centrale (22c) en une matière facilement déformable, placée entre deux anneaux cylindriques (22d) en une matière dure.

4. Raccord à brides selon l'une des revendications 1 à 3, caractérisé en ce que la largeur du creux annulaire (18, 20) est supérieure d'au moins 10% à l'épaisseur de la partie en forme de cylindre creux du joint annulaire (22) qui pénètre dans ce creux.

5. Raccord à brides selon l'une des revendications 1 à 4, utilisé pour le vide, caractérisé en ce que, pour faire rapidement le vide dans les cavités se trouvant du côté du vide, on prévoit entre l'extrémité cunéiforme du joint annulaire (22) et le creux annulaire (18, 20) du côté du vide, une fente suffisamment large entre les parois cylindriques voisines du joint annulaire et du creux, ou bien les faces frontales voisines des brides (12, 14) comportent des fentes radiales (26) qui débouchent dans lus creux annulaires (18, 20) et s'y étendent jusqu'au fond (18a, 20b) du creux.

**0 043 590**

**Fig.1**

**Fig. 2**